# EUROPEAN PATENT APPLICATION

(11) **EP 4 615 151 A1**
(43) Date of publication of application: **10.09.2025**
(21) Application number: 23884706.5
(22) Date of filing: 26.10.2023
(51) Int. Cl.: H04W 76/27

(54) **DATA RECEIVING METHOD AND APPARATUS, INFORMATION TRANSMITTING METHOD AND APPARATUS, TERMINAL, AND NETWORK SIDE DEVICE**

(30) Priority: 04.11.2022 CN 202211380073
(71) Applicant: Vivo Mobile Communication Co., Ltd., Dongguan, Guangdong 523863 (CN)
(72) Inventor: MO, Yitao, Dongguan, Guangdong 523863 (CN); LIU, Jiamin, Dongguan, Guangdong 523863 (CN)
(74) Representative: Walaski, Jan Filip
(86) International application number: PCT/CN2023/126679
(87) International publication number: WO 2024/093774

(57) **Abstract**

The present application relates to the technical field of communications, and discloses a data receiving method and apparatus, an information transmitting method and apparatus, a terminal, and a network side device. The data receiving method of embodiments of the present application comprises: a terminal receives a radio resource control (RRC) message, the RRC message carrying configuration indication information; and the terminal receives downlink data in an RRC inactive state according to the configuration indication information.

## Description

### CROSS-REFERENCE TO RELATED APPLICATIONS

The present application claims the priority of Chinese Patent Application No. 202211380073.9 filed in China on April 11, 2022, the entire content of which is hereby incorporated by reference.

### TECHNICAL FIELD

The present application belongs to the technical field of communication, and particularly relates to a method and apparatus for receiving data, a method and apparatus for transmitting information, a terminal, and a network side device.

### BACKGROUND

For multicast-broadcast services (Multicast-Broadcast Services, MBSs) or small data transmission (Small Data Transmission, SDT), user equipment (User Equipment, UE) needs to receive data in a connected mode. When the terminal is released to enter an inactive (INACTIVE) state and intends to perform MBS or SDT reception, the UE triggers a radio resource control (Radio Resource Control, RRC) resume process, then enters a connected mode, re-obtains a related configuration, and further receives corresponding data. This method consumes long time, resulting in low transmission efficiency.

### SUMMARY

Embodiments of the present application provide a method and apparatus for receiving data, a method and apparatus for transmitting information, a terminal, and a network side device to solve a problem of low downlink data transmission efficiency.

According to a first aspect, a method for receiving data is provided. The method includes:
receiving, by a terminal, a radio resource control RRC message, where the RRC message carries configuration indication information; and
receiving, by the terminal, downlink data in an RRC inactive state according to the configuration indication information.

According to a second aspect, an apparatus for receiving data is provided. The apparatus is applied to a terminal and includes:
a first receiving module configured to receive a radio resource control RRC message, where the RRC message carries configuration indication information; and
a second receiving module configured to receive downlink data in an RRC inactive state according to the configuration indication information.

According to a third aspect, a method for transmitting information is provided. The method includes:
transmitting, by a network side device, an RRC message to a terminal, where the RRC message carries configuration indication information, and the configuration indication information enables the terminal to receive downlink data in an RRC inactive state.

According to a fourth aspect, an apparatus for transmitting information is provided. The apparatus is applied to a network side device and includes:
a transmitting module configured to transmit an RRC message to a terminal, where the RRC message carries configuration indication information, and the configuration indication information enables the terminal to receive downlink data in an RRC inactive state.

According to a fifth aspect, a terminal is provided. The terminal includes a processor and a memory. The memory stores a program or an instruction runnable on the processor. The program or the instructions implement, when executed by the processor, steps of the method according to the first aspect.

According to a sixth aspect, a terminal is provided. The terminal includes a processor and a communication interface. The processor is configured to: receive a radio resource control RRC message, where the RRC message carries configuration indication information; and receive downlink data in an RRC inactive state according to the configuration indication information.

According to a seventh aspect, a network side device is provided. The network side device includes a processor and a memory. The memory stores a program or instructions runnable on the processor. The program or the instructions implement, when executed by the processor, steps of the method according to the third aspect.

According to an eighth aspect, a network side device is provided. The network side device includes a processor and a communication interface. The communication interface is configured to transmit an RRC message to a terminal. The RRC message carries configuration indication information. The configuration indication information enables the terminal to receive downlink data in an RRC inactive state.

According to a ninth aspect, a communication system is provided. The communication system includes: a terminal and a network side device, where the terminal may be configured to perform steps of the method according to the first aspect, and the network side device may be configured to perform steps of the method according to the third aspect.

According to a tenth aspect, a readable storage medium is provided. The readable storage medium stores a program or instructions. The program or the instructions implement, when executed by a processor, steps of the method according to the first aspect or the third aspect.

According to an eleventh aspect, a chip is provided. The chip includes a processor and a communication interface. The communication interface is coupled with the processor. The processor is configured to run a program or instructions to implement steps of the method according to the first aspect or the third aspect.

According to a twelfth aspect, a computer program/program product is provided. The computer program/program product is stored in a storage medium. The computer program/program product is executed by at least one processor to implement steps of the method according to the first aspect or the third aspect.

In the embodiments of the present application, the RRC message carrying the configuration indication information is received, and the downlink data are received in the RRC inactive state according to the configuration indication information, such that the terminal can receive the downlink data in the RRC inactive state, thereby improving transmission efficiency of the downlink data.

### BRIEF DESCRIPTION OF THE DRAWINGS

FIG. 1 is a block diagram of a wireless communication system to which an embodiment of the present application is applicable;
FIG. 2 is a schematic flowchart of a method for receiving data according to an embodiment of the present application;
FIG. 3 is a schematic diagram of an example in which a terminal performing MBS receives and processes an RRC release message or a paging message;
FIG. 4 is a schematic diagram of an example in which a terminal performing SDT receives and processes an RRC release message or a paging message;
FIG. 5 is a schematic flowchart of a method for transmitting information according to an embodiment of the present application;
FIG. 6 is a schematic diagram of modules of an apparatus for receiving data according to an embodiment of the present application;
FIG. 7 is a schematic structural diagram of a terminal according to an embodiment of the present application;
FIG. 8 is a schematic diagram of modules of an apparatus for transmitting information according to an embodiment of the present application;
FIG. 9 is a schematic structural diagram of a network side device according to an embodiment of the present application; and
FIG. 10 is a schematic structural diagram of a communication device according to an embodiment of the present application.

### DETAILED DESCRIPTION

The technical solutions in embodiments of the present application are clearly described in the following with reference to the accompanying drawings in the embodiments of the present application. Apparently, the described embodiments are some embodiments rather than all embodiments of the present application. Based on the embodiments of the present application, all other embodiments obtained by a person of ordinary skill in the art fall within the protection scope of the present application.

The terms "first", "second" and so forth, in the specification and claims of the present application, are used for distinguishing between similar objects, instead of describing a particular order or sequential order. It should to be understood that terms used in this way are exchangeable in a proper case, such that the embodiments of the present application can be implemented in an order different from the order shown or described herein. Objects distinguished by "first" and "second" are usually of one type, and the number of the objects is not limited. For example, one or more first objects may be provided. In addition, "and/or" used in the specification and the claims represents at least one of connected objects. The character "/" generally represents that associated objects are in an "or" relationship.

It is worth pointing out that the technologies described in the embodiments of the present application are not limited to a long term evolution (Long Term Evolution, LTE)/long term evolution-advanced (LTE-Advanced LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of the present application are often used interchangeably. The technology described can be applied to the systems and radio technologies mentioned above, and can also be applied to other systems and radio technologies. The following descriptions describe a new radio (New Radio, NR) system for example purposes. NR terms are used in most of the following descriptions. However, these technologies may also be applied to applications other than an NR system application, for example, a 6th generation (6^{th} Generation, 6G) communication system.

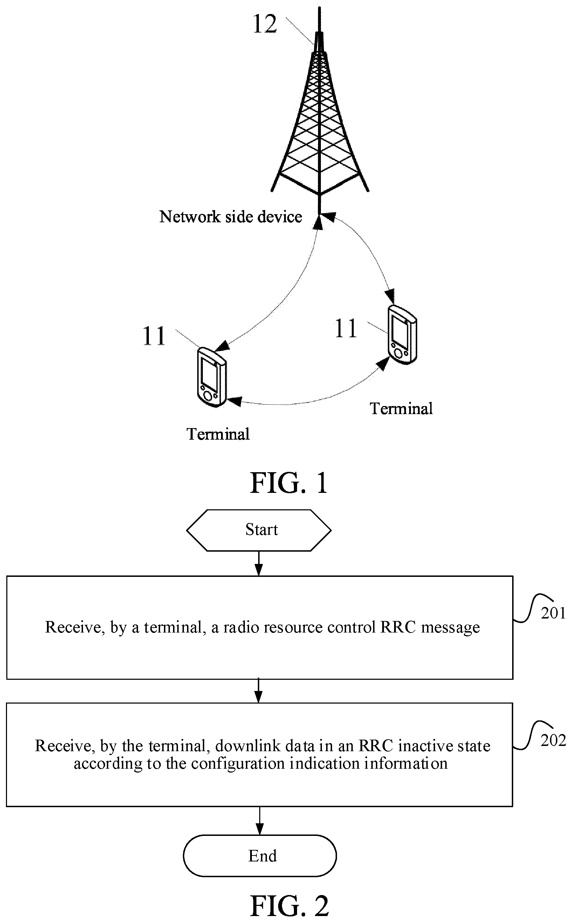

FIG. 1 shows a block diagram of a wireless communication system to which the embodiment of the present application is applicable. The wireless communication system includes a terminal 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), a pedestrian terminal (Pedestrian User Equipment, PUE), a smart home (a home device having a radio communication function, such as a refrigerator, a television, a washing machine, or furniture), a game console, a personal computer (personal computer, PC), a teller machine, or a self-service machine, a sensing business terminal, various sensors, and an intelligent camera. The wearable device includes: a smartwatch, a smart bracelet, a smart headset, smart glasses, smart jewelry (a smart bangle, a smart chain bracelet, a smart ring, a smart necklace, a smart anklet, etc.), a smart wristband, smart clothes, etc. It should be noted that a specific type of the terminal 11 is not limited in the embodiments of the present application. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a WiFi node, etc. The base station may be referred to as a node B, an evolved node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), a sensing signal transmitting device, a sensing information receiving device or another proper term in the art. As long as the same technical effect is achieved, the base station is not limited to a specific technical word. It should be noted that in the embodiment of the present application, a base station in an NR system is taken as an example for introduction merely, and a specific type of the base station is not limited.

Related technologies of the present application are first briefly described as below.

### 1. New radio (New Radio, NR) multicast reception

Control information (a service bearer configuration parameter, scheduling control information, etc.) of an MBS is configured by using an RRC dedicated message (for example, an RRC reconfiguration message (reconfiguration message)), and then UE obtains control information of a multicast service according to the RRC dedicated message and receives the MBS. Specifically, A network (NetWork, NW) schedules, by using a group radio network temporary identity (group Radio Network Temporary Identity, G-RNTI), a multicast service/several multicast services in which the UE is interested (for example, configures an association relationship between the G-RNTI, a service identity temporary mobile group identity (Temporary Mobile Group Identity, TMGI), and scheduling information). On a UE side, the UE monitors the configured G-RNTI physical downlink control channel (Physical Downlink Control Channel, PDCCH) to obtain data scheduling for reception.

### 2. Group paging (group paging) in multicast

During NR multicast transmission, an NW may temporarily release a terminal from a connected (CONNECTED) state back to an inactive (INACTIVE) state (since a multicast service temporarily has no data, or a resource is shortage on an NW side temporarily). When the multicast service is activated (new data arrive) or when a new radio resource of the NW is idle again, the NW may notify a corresponding TMGI by carrying a TMGI list (list) on a paging message. In a case that the UE is interested in a service corresponding to the TMGI, the UE triggers an RRC resume process, then enters a connected mode, and re-obtains a configuration related to the multicast service, thereby receiving a corresponding service.

### 3. Downlink mobile terminated early data transmission (Mobile Terminated Early Data Transmission, ST-EDT)

In a long term evolution (Long Term Evolution, LTE) system, an NW carries an MP-EDT trigger message on a paging message. Subsequently, UE initiates an EDT process. After receiving a request message (carrying an MP-EDT reason value) of the UE, the NW connects an RRC response message to data of a data radio bearer (Data Radio Bearer, DRB) in series, to form a protocol data unit, and transmits the protocol data unit to the UE, finally implementing reception of a downlink service.

A method and apparatus for receiving data, a method and apparatus for transmitting information, a terminal, and a network side device according to the embodiments of the present application are described in detail below with reference to the accompanying drawings through some embodiments and their application scenarios.

As shown in FIG. 2, an embodiment of the present application provides a method for receiving data. The method includes:
Step 201: A terminal receives a radio resource control RRC message.

Optionally, the RRC message carries configuration indication information.

Step 202: The terminal receives downlink data in an RRC inactive state according to the configuration indication information.

It should be noted that the terminal receives the RRC message carrying the configuration indication information, and receives the downlink data in the RRC inactive state according to the configuration indication information, such that the terminal can receive the downlink data in the RRC inactive state, thereby avoiding a problem that the terminal can receive the downlink data only after entering the RRC connected state, and improving transmission efficiency of the downlink data.

Optionally, The RRC message may be an RRC release message, a paging message, a dedicated RRC message, or the like.

Optionally, in another embodiment of the present application, the configuration indication information includes at least one of the following:
A11: A first configuration, where the first configuration is used for receiving the downlink data.

Optionally, the first configuration includes at least one of the following:
A111. Common frequency resource configuration information for receiving downlink data in an inactive state.
A112: Downlink control channel configuration information (for example, transmission configuration indicator (Transmission Configuration Indicator, TCI) configuration information corresponding to a PDCCH) for receiving downlink data in an inactive state.
A113: Downlink shared channel configuration information (for example, TCI configuration information corresponding to a physical downlink shared channel (Physical Downlink Shared Channel, PDSCH)) for receiving downlink data in an inactive state.
A114: Semi-persistent scheduling configuration information for receiving downlink data in an inactive state.
A115. Group scheduling configuration information for receiving downlink data in an inactive state.
A12: First indication information, where the first indication information is used for indicating a first operation.

Optionally, in another embodiment of the present application, the first operation includes at least one of the following:
A11: The first configuration is stored.

That is, after obtaining the first configuration, the terminal needs to store the first configuration in the terminal, facilitating application of the first configuration by the terminal.

A12: The first configuration is applied.

It should be noted that the operation that the first configuration information is applied may be understood as setting the first configuration to a valid state in a current state. That is, the terminal may transmit and/or receive data by using the first configuration in the current state.

Optionally, in a case that the configuration indication information does not carry the first configuration, the first configuration may be a configuration configured before the terminal receives the RRC message.

For example, when the first configuration is TCI configuration information, an optional implementation of applying the first configuration includes: a higher layer of the terminal indicates the TCI configuration information corresponding to the PDCCH and/or the PDSCH to a physical layer. The physical layer of the terminal receives downlink data in the RRC inactive state according to the TCI configuration information. The TCI configuration information may be a TCI configuration configured for the terminal before the RRC release message is received, or may be indicated by the RRC release message. Additionally, in a case that no configuration information is configured in the RRC release message, the terminal uses the TCI configuration information configured for the UE before the RRC release message is received.

A13: Downlink small data transmission is performed.

This case refers to that the terminal receives the downlink small data.

Optionally, In another embodiment of the present application, the method further includes:

the terminal receives a paging message, and performs a second operation in a case that the first condition is satisfied.

Optionally, the second operation includes at least one of the following:
B11: The first configuration is applied.
B12: An RRC connection resume process is triggered.

It should be noted that after entering the connected mode by triggering the RRC connection resume process, the terminal receives the downlink data according to the first configuration, for example, receives multicast downlink data.

B13: A first paging group list is ignored, where the first paging group list is used for notifying activation of one or more multicast sessions indicated by a mobile group identity.

It should be noted that the ignored herein may be understood as that the terminal does not parse the first paging group list and does not process the first paging group list. Optionally, the first paging group list is included in the paging message. In this case, the first paging group list is an R17 paging group list (paging record list).

Further optionally, the terminal ignores the first paging group list only after receiving the RRC release message and receiving no deactivation (deactivation) indication of the downlink data.

This case can also be understood as: the terminal parses only a terminal identity (for example, UE-ID) in an R15 paging record list or a TMGI in an R18 paging record list.

Optionally, the first condition includes at least one of the following:
B21: The terminal is in an RRC inactive state.

For example, when the terminal is in the RRC inactive state, the terminal ignores the first paging group list.

B22: The terminal joins the one or more multicast sessions indicated by the mobile group identity.

It should be noted that the mobile group identity may be a TMGI. This case refers to that the terminal joins the multicast session and needs to receive the MBS.

For example, the terminal joins the one or more multicast sessions indicated by the mobile group identity, and the terminal may ignore the first paging group list.

B23: The mobile group identity is included in a second paging group list, the second paging group list is used for notifying a change of a second configuration, the second configuration corresponds to the one or more multicast sessions indicated by the mobile group identity, and the second configuration is used for receiving downlink data corresponding to the multicast sessions.

It should be noted that the second paging group list is included in the paging message. In this case, the second paging group list is for an R18 group paging (R18 group paging) message.

For example, in this case, the terminal triggers the RRC connection resume process. That is, in a case that the R18 paging record list includes a TMGI corresponding to a service in which the UE joins, the terminal triggers the RRC connection resume process, and prepares to enter a connected mode. The R18 paging record list is used for instructing the terminal to recover an RRC connection (since a configuration is updated, the terminal needs to be switched to the connected mode to obtain a configuration again, or since an NW needs the terminal to switch to the connected mode to receive the multicast service).

B24: The terminal is receiving the downlink data by using the first configuration.

For example, in a case that the terminal is receiving the downlink data by using the first configuration, the terminal may ignore the first paging group list.

B25: The terminal stores the first configuration.

For example, the terminal stores the first configuration, and the terminal may ignore the first paging group list.

B26: The first configuration is considered to be valid.

For example, the first configuration is considered to be valid, and the terminal may ignore the first paging group list.

B27: A paging record list of the paging message does not include a terminal identity matching an identity of the terminal.

This case can be understood as: the terminal identity included in the paging record list of the paging message is different from the identity of the terminal.

For example, in a case that the paging record list of the paging message does not include the terminal identity matching the identity of the terminal, the terminal triggers the RRC connection resume process.

It should be noted that the paging message described in the embodiment of the present application includes a PDCCH scrambled with a paging radio network temporary identity (Paging Radio Network Temporary Identity, P-RNTI) and paging information (paging message). The paging information may be, for example, a PDSCH message.

Optionally, in another embodiment of the present application, the method further includes:
the terminal receives a paging message, and applies the first configuration in a case that a second condition is satisfied.

Optionally, the second condition includes at least one of the following:

C101: The terminal is in the RRC inactive state.

This case may be understood as that the terminal uses the first configuration to receive the downlink data in a case of receiving the paging message when the terminal is in the RRC inactive state.

C102: The terminal joins the one or more multicast sessions indicated by the mobile group identity.

This case may be understood as that in a case that the terminal joins the multicast session, in a case of receiving the paging message, the terminal uses the first configuration to receive the downlink data of the multicast session.

C103: The mobile group identity is included in a first paging group list.

This case may be understood as that in a case that the TMGI is included in the R17 paging record list in the paging message, the terminal uses the first configuration to receive the downlink data.

C104: The mobile group identity is included in a first paging group list, indication information corresponding to an element storage location of the mobile group identity in a first paging record list indicates service activation, and the indication information is indication information of an element corresponding to the element storage location in a second paging record list.

It should be noted that a plurality of TMGIs are provided in the first paging group list, and indication information corresponding to the TMGIs in the first paging group list exists in the second paging record list. For example, the indication information may indicate true or false. When the indication information indicates true, it indicates that a service indicated by the corresponding mobile group identity is in an activated state. When the indication information indicates false, it indicates that the service indicated by the corresponding mobile group identity is in an inactive state. When the service is in the activated state, the terminal may use the first configuration to receive downlink data of the service indicated by the mobile group identity.

C105: The terminal suspends reception of the downlink data.

The condition that the terminal suspends reception of the downlink data may be understood as: all discontinuous reception (Discontinuous Reception, DRX) timers associated with the corresponding G-RNTI are stopped, a multicast radio bearer (multicast radio bearer, MRB) is suspended, and a value of a packet data convergence protocol (Packet Data Convergence Protocol, PDCP) state variable corresponding to the MRB is maintained unchanged. Moreover, the terminal continues to maintain the configuration stored previously.

C106: The terminal receives the downlink data without using the first configuration.

C107: The terminal stores the first configuration.

C108: The first configuration is considered to be valid.

C109: The terminal receives an inactivation indication of the downlink data, and the deactivation indication of the downlink data is used for instructing to stop receiving the downlink data.

Optionally, this case can be understood as: when the UE receives the downlink data in the inactive state, the terminal receives the deactivation indication of the downlink data, and the terminal needs to suspend reception of the downlink data based on the deactivation indication. Specifically, a lower layer (lower layer) of the terminal notifies a higher layer (higher layer) of the deactivation indication, and the higher layer suspends reception of the downlink data.

C110: A paging record list of the paging message does not include a terminal identity matching an identity of the terminal.

Optionally, the RRC message further includes: an effective time offset of the first configuration, where the effective time offset is used for instructing the terminal to apply the first configuration at a moment, and the moment is obtained after the effective time offset is added to a moment at which the RRC message or a target group paging message is received; and

the target group paging message is a paging message including a mobile group identity corresponding to one or more multicast sessions that the terminal joins.

Optionally, in another embodiment of the present application, the method further includes:

the terminal ignores a third configuration in the RRC inactive state, where the third configuration is used for transmitting uplink data.

For example, the third configuration may be a configuration related to hybrid automatic repeat request (Hybrid Automatic Repeat reQuest, HARQ) feedback and/or a physical uplink control channel (Physical Uplink Control Channel, PUCCH) resource. For example, the configuration is a PUCCH resource configuration for multicast, and a HARQ codebook correlation configuration. That is to say, the terminal does not apply the third configuration (that is, the terminal only stores the third configuration, but ignores to apply the third configuration) in the RRC inactive state. The terminal applies the third configuration when the terminal returns to the RRC connected state again from the RRC inactive state (for example, when the foregoing R18 paging record list includes the TMGI corresponding to the service in which the terminal joins).

Optionally, in another embodiment of the present application, the method further includes:

the terminal stops receiving the downlink data in a case that a deactivation indication of the downlink data is received in a process of receiving the downlink data in the RRC inactive state.

It should be noted that a process that the terminal receives the downlink data in the RRC inactive state may be understood as satisfying the following cases:
the terminal is receiving the downlink data by using the first configuration;
the terminal stores the first configuration;
the first configuration is considered to be valid.

The step that the terminal stops receiving the downlink data may be understood as that the terminal suspends reception of the downlink data.

Optionally, in another embodiment of the present application, the method further includes:

the terminal receives the paging message, and performing a third operation in a case that the paging record list of the paging message includes the terminal identity matching the identity of the terminal.

The third operation includes any one of the following:
D11: The first paging group list is ignored.

It should be noted that the operation that the first paging group list is ignored may be understood as not explaining the first paging group list, and not processing the first paging group list.

D12: The second paging group list is ignored.

It should be noted that the operation that the second paging group list is ignored may be understood as not explaining the second paging group list, and not processing the second paging group list.

It may be understood that the terminal receives an R15 paging message, the paging message includes a terminal identity the same as the identity of the terminal, such that the terminal may ignore the R17 paging record list and/or the R18 paging record list, or the terminal may continue to process the R17 paging record list and/or the R18 paging record list.

Optionally, in another embodiment of the present application, the terminal receives downlink data in an RRC inactive state according to the configuration indication information. Specifically, this implementation includes:

the terminal receives a paging message, triggers a downlink small data transmission process in a case that a third condition is satisfied, and receives data of downlink small data transmission in the RRC inactive state.

The third condition includes at least one of the following:
E11: A measurement value corresponding to a downlink path loss reference is greater than or equal to a first threshold.
E12: The terminal is in the RRC inactive state.
E13: The first indication information indicates the downlink small data transmission.
E14: The first configuration is indicated.
E15: A paging record list of the paging message includes a terminal identity matching an identity of the terminal.

This case can be understood as: the terminal identity included in the paging record list of the paging message is identical to the identity of the terminal.

E16: Second indication information corresponding to the terminal identity matching the identity of the terminal and included in the paging record list of the paging message indicates the downlink small data transmission.

It should be noted that when satisfying any one or more of E11 to E16, the terminal may receive the downlink small data transmission in the RRC inactive state.

Optionally, in another embodiment of the present application, the method further includes:
the terminal maintains a value of a PDCP state variable unchanged when suspending a PDCP entity corresponding to a DRB.

It should be noted that optionally, the DRB may be a small data transmission data bearer (SDT-DB).

Optionally, the terminal may maintain the value of the PDCP state variable unchanged when receiving the RRC message. A downlink small data transmission process is triggered when the paging message is received and the first indication information indicates the downlink small data transmission, and data of the downlink small data transmission are received in the RRC inactive state.

Optionally, in another embodiment of the present application, the method further includes:
in a case that a downlink small data transmission process is triggered, the terminal receives the data of the downlink small data transmission in the RRC inactive state after transmitting an uplink message by using a target resource.

The target resource includes at least one of the following:
F11: A first random access resource used for transmitting message 1 (Msg1) of a random access process.

It should be noted that the first random access resource mentioned in the present application may include a preamble (preamble) resource, a random access occasion (RACH Occasion, RO) resource, etc. The RACH is an English abbreviation for random access channel (Random Access Channel).

Optionally, the first random access resource may be used for at least one of the following: an initial access process, an RRC connection resume process, and an uplink small data transmission process.

F12: A second random access resource used for transmitting message A (MsgA) of the random access process.

It should be noted that the second random access resource mentioned in the present application may include a preamble resource, an RO resource, etc.

Optionally, the second random access resource may be used for at least one of the following: an initial access process, an RRC connection resume process, and an uplink small data transmission process.

F13: A first configuration authorization resource, where the first configuration authorization resource is included in the first configuration.

F14: A second configuration authorization resource used for an uplink small data transmission process.

It should be noted that the first configuration authorization resource and the second configuration authorization resource are used in a terminal configuration authorization process. The first configuration authorization resource and the second configuration authorization resource may be identical or not.

That is to say, in this case, the terminal first transmits an uplink message, and then receives downlink data fed back by a network side.

Optionally, in another embodiment of the present application, the method further includes:
in a case that the downlink small data transmission process is triggered, the terminal selects the first configuration authorization resource or the second configuration authorization resource as the target resource in a case that a fourth condition is satisfied; and selects the first random access resource or the second random access resource as the target resource in a case that the fourth condition is unsatisfied.

The fourth condition includes at least one of the following:
H11: A measurement value corresponding to a downlink path loss reference is greater than or equal to a second threshold.

It should be noted that the second threshold is used for the uplink small data transmission process. That is to say, in a case that the measurement value corresponding to the downlink path loss reference is greater than or equal to the second threshold, the terminal may select to use the first configuration authorization resource or the second configuration authorization resource to transmit the uplink message. In a case that the measurement value corresponding to the downlink path loss reference is less than the second threshold, the terminal may select to use the first random access resource or the second random access resource to transmit the uplink message.

H12: A timing advance (Timing Advance, TA) is valid.

For example, in a case that the TA is valid, the terminal may select to use the first configuration authorization resource or the second configuration authorization resource to transmit the uplink message. In a case that the TA is invalid, the terminal may select to use the first random access resource or the second random access resource to transmit the uplink message.

H13: The first configuration authorization resource is configured.

For example, in a case that the first configuration authorization resource is configured, the terminal may select to use the first configuration authorization resource to transmit the uplink message. In a case that the first configuration authorization resource is not configured, the terminal may select to use the first random access resource or the second random access resource to transmit the uplink message.

H14: The second configuration authorization resource is configured.

For example, in a case that the second configuration authorization resource is configured, the terminal may select to use the second configuration authorization resource to transmit the uplink message. In a case that the second configuration authorization resource is not configured, the terminal may select to use the first random access resource or the second random access resource to transmit the uplink message.

H15: A measurement value of at least one downlink reference signal in one or more downlink reference signals corresponding to the first configuration authorization resource is greater than or equal to a third threshold.

For example, in a case that the measurement value of the at least one downlink reference signal in the one or more downlink reference signals corresponding to the first configuration authorization resource is greater than or equal to the third threshold, the terminal may select to use the first configuration authorization resource to transmit the uplink message. In a case that measurement values of all downlink reference signals in the one or more downlink reference signals corresponding to the first configuration authorization resource are less than the third threshold, the terminal may select to use the first random access resource or the second random access resource to transmit the uplink message.

H16: A measurement value of at least one downlink reference signal in one or more downlink reference signals corresponding to the second configuration authorization resource is greater than or equal to a fourth threshold.

For example, in a case that the measurement value of the at least one downlink reference signal in the one or more downlink reference signals corresponding to the second configuration authorization resource is greater than or equal to the fourth threshold, the terminal may select to use the second configuration authorization resource to transmit the uplink message. In a case that measurement values of all downlink reference signals in the one or more downlink reference signals corresponding to the second configuration authorization resource are less than the fourth threshold, the terminal may select to use the first random access resource or the second random access resource to transmit the uplink message.

Optionally, in another embodiment of the present application, the method further includes:
in a case that the downlink small data transmission process is triggered, the terminal performs a fifth operation in a case that a fifth condition is satisfied.

Optionally, the fifth operation includes at least one of the following:
J11: The terminal transmits the uplink message by using a random access resource corresponding to the uplink small data transmission process based on the random access process.

It should be noted that in this case, a particular random access resource is configured for the uplink small data transmission. The terminal may transmit the uplink message on the random access resource corresponding to the uplink small data transmission process in the random access process.

J12: The terminal transmits the uplink message by using a configuration authorization, where the configuration authorization corresponds to the uplink small data transmission process based on the configuration authorization.

It should be noted that in this case, a particular configuration authorization resource is configured for the uplink small data transmission. The terminal may transmit the uplink message by using a configuration authorization resource corresponding to the uplink small data transmission process.

J13: The medium access control protocol data unit (Medium Access Control Protocol Data Unit, MAC PDU) including the common control channel (Common Control CHannel, CCCH) message is reconstructed.

Optionally, reconstruction may be understood as performing bit padding (padding) to obtain a new MAC PDU.

The fifth condition includes at least one of the following:
J21: The terminal does not perform first transmission of a common control channel message.

For example, when the terminal does not perform first transmission of the common control channel message, the terminal reconstructs the medium access control protocol data unit (Medium Access Control Protocol Data Unit, MAC PDU) including the common control channel message.

J22: The terminal does not generate an MAC PDU including the common control channel message.

For example, when the terminal does not generate the MAC PDU including the common control channel message, the terminal reconstructs the medium access control protocol data unit (Medium Access Control Protocol Data Unit, MAC PDU) including the common control channel message.

J23: A trigger condition of the uplink small data transmission process based on the random access process exists.

For example, when the trigger condition of the uplink small data transmission process based on the random access process exists, the terminal transmits the uplink message by using a random access resource corresponding to the uplink small data transmission process based on the random access process.

J24: A trigger condition of the uplink small data transmission process based on a configuration authorization exists.

For example, when the trigger condition of the uplink small data transmission process based on the configuration authorization exists, the terminal transmits the uplink message by using a configuration authorization, where the configuration authorization corresponds to the uplink small data transmission process based on the configuration authorization.

J25: A quantity of reception failures of a random access response message is greater than or equal to A, or a quantity of contention resolution failures is greater than or equal to B, where A and B are integers greater than or equal to 1.

It should be noted that values of A and B are configured for the terminal by the network side device.

For example, in a case that the quantity of the reception failures of the random access response message is greater than or equal to A, the terminal transmits the uplink message by using a random access resource corresponding to the uplink small data transmission process based on the random access process. For another example, in a case that the quantity of the contention resolution failures is greater than or equal to B, the terminal transmits the uplink message by using a random access resource corresponding to the uplink small data transmission process based on the random access process.

Optionally, in another embodiment of the present application, the method further includes:
the terminal starts a first timer in a case that a first common control channel message is transmitted or the downlink small data transmission process is triggered.

The first timer runs in a process that the terminal performs the downlink small data transmission process.

Optionally, in another embodiment of the present application, the method further includes:
the terminal restarts the first timer in a case of receiving a first dedicated transmission channel (Dedicated Transmission Channel, DTCH).

Optionally, in another embodiment of the present application, the method further includes:
the terminal enters an idle state in a case that the first timer expires, and releases the first configuration.

That is to say, when the first timer expires, it indicates that the terminal cannot perform downlink small data transmission. In this case, the terminal may release the connection, no longer applies the first configuration, and returns to an idle mode to save energy.

Optionally, in another embodiment of the present application, the method further includes:
the terminal triggers an uplink small data transmission process based on a configuration authorization, and performs a sixth operation in a case that a sixth condition is satisfied; and performs a seventh operation in a case that the sixth condition is unsatisfied.

Optionally, the sixth operation includes at least one of the following:
K11: The terminal performs the uplink small data transmission process based on the configuration authorization by using the initial uplink bandwidth part (Bandwidth Part, BWP) used for the reduced capability (reduced capability, RedCap).
K12: The terminal monitors a physical downlink control channel by using the initial downlink BWP used for the RedCap.

Optionally, the seventh operation includes at least one of the following:
K21: The terminal performs the uplink small data transmission process based on the configuration authorization by using the initial uplink BWP.
K22: The terminal monitors a physical downlink control channel by using the initial downlink BWP.

Specifically, the sixth condition includes at least one of the following:

K11, the terminal is a reduced capability RedCap terminal.

That is, when the terminal is a reduced capability RedCap terminal, the terminal can perform the uplink small data transmission process based on the configuration authorization by using the initial uplink BWP used for the RedCap, and/or the terminal can monitor the physical downlink control channel by using the initial downlink BWP used for the RedCap. Otherwise, the terminal performs the uplink small data transmission process based on the configuration authorization by using the initial uplink BWP, and/or monitors the physical downlink control channel by using the initial downlink BWP.

K12: An initial uplink BWP used for RedCap is configured on a selected uplink carrier.

That is, when the initial uplink BWP used for the RedCap is configured on the selected uplink carrier, the terminal can perform the uplink small data transmission process based on the configuration authorization by using the initial uplink BWP used for the RedCap. Otherwise, the terminal performs the uplink small data transmission process based on the configuration authorization by using the initial uplink BWP.

K13: The terminal is in the RRC inactive state.

That is, when the terminal is in the RRC inactive state, the terminal can perform the uplink small data transmission process based on the configuration authorization by using the initial uplink BWP used for the RedCap, and/or the terminal can monitor the physical downlink control channel by using the initial downlink BWP used for the RedCap. Otherwise, the terminal performs the uplink small data transmission process based on the configuration authorization by using the initial uplink BWP, and/or monitors the physical downlink control channel by using the initial downlink BWP.

K14: An initial downlink BWP used for the RedCap is configured.

That is, when the initial downlink BWP used for the RedCap is configured, the terminal monitors the physical downlink control channel by using the initial downlink BWP used for the RedCap. Otherwise, the terminal monitors a physical downlink control channel by using the initial downlink BWP.

It should be noted that according to the embodiment of the present application, the terminal can receive data of the MBS and can also receive data of the SDT in the RRC inactive state. Specific applications of the present application are described below by using examples in an MBS scenario and an SDT scenario respectively.

### Application Case 1: MBS Scenario

A terminal receives an RRC release message. The RRC release message carries configuration indication information. The configuration indication information includes at least one of the following:
first indication information, where the first indication information is used for indicating a first operation; and
a first configuration, where the first configuration is used for receiving downlink data, and in this case, the first configuration is a multicast configuration for receiving the downlink data.

The first operation includes at least one of the following:
the first configuration is stored; and
the first configuration is applied.

Further, in a case that the first operation includes an operation that the first configuration is stored and an operation that the first configuration is applied, the terminal stores and applies the multicast configuration (optionally, the terminal considers that the multicast configuration is valid), and perform multicast reception in the RRC inactive state according to the multicast configuration. Moreover, the terminal may also ignore an R17 paging record list (optionally, ignore the R17 paging record list only after the RRC release message is received and the deactivation indication is received), or UE parses only a terminal identity in an R15 paging record list or a TMGI in the R17 paging record list.

In a case that the first operation includes an operation that the first configuration is stored, the terminal stores the multicast configuration (optionally, the terminal considers that the multicast configuration is valid). Moreover, the terminal receives a first paging message (including a TMGI corresponding to a service in which the terminal joins) after receiving the RRC release message, and the R17 paging record list includes the TMGI corresponding to the service in which the terminal joins (or further, indication information of an element corresponding to the R18 paging record list corresponding to an element of the R17 paging record list having the TMGI corresponding to a service in which the terminal joins is service activation), such that the terminal starts to perform the multicast reception in the RRC inactive state according to the first configuration (specifically: an MAC layer is triggered to perform a DRX operation, a TCI state is indicated to a lower Layer, and semi-persistent scheduling (Semi-Persistent Scheduling, SMS) used for the multicast service is initialized).

Further, in a case that the R18 paging record list includes a TMGI corresponding to a service in which the terminal joins, the terminal triggers an RRC resume process and prepares to enter a connected mode. The R18 paging record list is used for instructing the terminal to recover an RRC connection (since a configuration is updated, the terminal needs to be switched to the connected mode to obtain a configuration again, or since an NW needs the terminal to switch to the connected mode to receive the multicast service).

Additionally, the RRC release message further includes: an effective time offset of the first configuration. The terminal applies the multicast configuration after the terminal receives the RRC release message or the group paging message having the TMGI corresponding to the service to which the terminal joins is offset by the effective time offset.

Additionally, when storing the configuration, the terminal ignores to apply a configuration related to HARQ feedback and/or a PUCCH (for example, a PUCCH resource configuration for multicast and a HARQ codebook related configuration are stored but applied). The terminal applies the above configuration when the terminal returns to the RRC connected state again from the RRC inactive state (for example, when the foregoing R18 paging record list includes the TMGI corresponding to the service in which the terminal joins).

Further, in a case that the terminal performs multicast reception in the RRC inactive state, and receives a deactivation (deactivation) indication (the indication may be per G-RNTI, or per MAC, or associated with a plurality of G-RNTIs, and specifically, associations of the plurality of G-RNTIs are indicated by using the configuration) of multicast data reception, a lower layer of the terminal notifies a higher layer, and the higher layer pauses the multicast reception (for example, stops all DRX timers associated with corresponding G-RNTIs, suspends the MSB, and maintains a value of a PDCP state variable corresponding to the MSB unchanged), and continues to maintain a previously stored configuration.

Further, (in a case that the UE stores the multicast configuration, and) the terminal receives a first paging message (including a TMGI corresponding to a service in which the terminal joins) after receiving a deactivation indication of the multicast data reception, and the R17 paging record list in the paging message includes the TMGI corresponding to the service in which the terminal joins (or further, indication information of an element corresponding to the R18 paging record list corresponding to an element of the R17 paging record list having the TMGI corresponding to a service in which the terminal joins is service activation), such that the terminal starts to perform the multicast reception in the RRC inactive state according to the configuration.

Further, in a case of receiving individual paging, the terminal ignores the R17paging record list and the R18paging record list, or continues to process the R17paging record list and the R18paging record list.

It should be noted that the R18 paging record list is divided into two parts, where part 1 is used for R17paging record list (TMGI) + R18 activation in an active state (activation in INACTIVE) (1 bit indication information, enumeration type), and part 2 is the TMGI list and is only R18 in a disconnected state. Part 1 and part 2 belong to a choice structure. In a case that only the R17paging record list exists, inactive terminals of R17 and R18 need to enter an RRC disconnected mode to receive the downlink data.

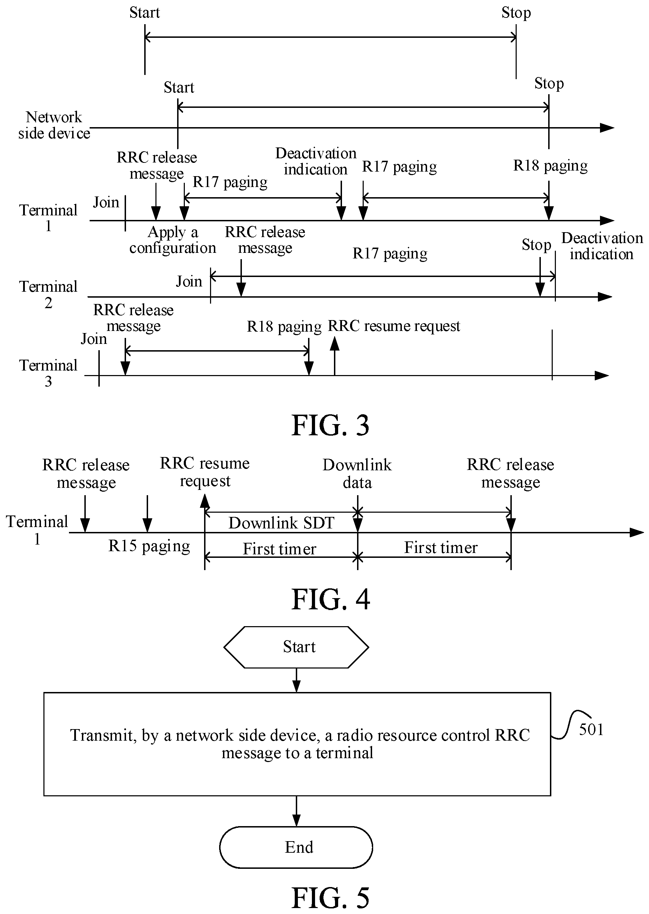

As shown in FIG. 3, examples of message receiving and processing by the terminal in this case are provided. In FIG. 3, the terminal 1 receives the RRC release message, applies the multicast configuration when receiving an R17 paging message, suspends multicast reception when receiving the deactivation indication of the multicast reception, and continues to perform the multicast reception when receiving R17 paging again later. When receiving R18 paging, the terminal needs to exit the inactive state and enter a connected mode. Additionally, in a case of receiving the R18 paging during the multicast reception, the terminal also continues to perform the multicast reception in a process of entering the connected mode, and also continues to perform the multicast reception after entering the connected mode. Still additionally, in a case of receiving the R18 paging in a process that the multicast reception is suspended, the terminal also continues to perform multicast reception after entering the connected mode. The terminal 2 in FIG. 3 receives the RRC release message, and stores and applies the multicast configuration until the multicast transmission stops. The terminal 3 in FIG. 3 stores and applies the multicast configuration when receiving the RRC release message, and recovers an RRC connection when receiving the R18 paging.

Application Case 2: SDT Scenario

A terminal receives an RRC release message. The RRC release message carries configuration indication information. The configuration indication information includes at least one of the following:
first indication information, where the first indication information is used for indicating a first operation, and the first operation includes downlink small data transmission; and
a first configuration, where the first configuration is used for receiving the downlink data.

The terminal may perform one of the following based on the configuration indication information:
a value of a PDCP state variable corresponding to the DRB is maintained unchanged; and
a downlink small data transmission process is performed after a paging message is received.

Further, a trigger condition of the downlink small data transmission process includes at least one of the following:
a measurement value corresponding to a downlink path loss reference is greater than or equal to a first threshold;
a paging record list of the paging message includes a terminal identity matching an identity of the terminal; and
second indication information corresponding to the terminal identity matching the identity of the terminal and included in the paging record list of the paging message indicates the downlink small data transmission.

Additionally, in a case that the trigger condition of the uplink small data transmission process based on the random access process exists at this time, the terminal may transmit an uplink message by using a random access resource corresponding to the uplink small data transmission process based on the random access process. In this case, it may be understood as that the uplink small data transmission is prior to the downlink small data transmission.

Moreover, when only the trigger condition of the downlink small data transmission process is satisfied, the terminal uses a dedicated RO resource corresponding to the downlink small data transmission process.

Further, in a case that the dedicated RO resource is used, after the quantity of reception failures of the random access response message is greater than or equal to A, and the trigger condition of the uplink small data transmission process based on the random access process exists, the terminal transmits the uplink message by using a random access resource corresponding to the uplink small data transmission process based on the random access process.

Further, the terminal starts a first timer in a case that a first common control channel message is transmitted or the downlink small data transmission process is triggered.

The terminal restarts the first timer in a case of receiving a first DTCH message.

The terminal enters an idle state in a case that the first timer expires, and releases the first configuration.

As shown in FIG. 4, examples of message receiving and processing by the terminal in this case are provided. In FIG. 4, the terminal 1 receives the RRC release message, and when receiving R15 paging, the terminal does not perform SDT since an SDT trigger condition is unsatisfied. The terminal recovers the RRC connection. When transmitting an RRC resume request, the terminal starts the first timer to perform the SDT. When receiving the downlink data, the terminal restarts the first timer. After receiving the RRC release message again, the terminal releases the connection and enters an idle mode.

It should be noted that at least one embodiment of the present application can achieve the following beneficial effects.

For a terminal performing the MBS, content included in a group paging message received by the terminal in different scenarios and a corresponding terminal processing behavior are defined to reduce overheads of the group paging message as much as possible. The terminal in the RRC inactive state is enabled to smoothly receive the multicast service data or perform terminal state conversion.

For a terminal performing the SDT, an indication of small data transmission is allowed to be carried in the RRC release message. Subsequently, the SDT terminal in the RRC inactive state receives data of the downlink small data transmission according to whether a monitored paging message has identify information of the terminal and a condition for triggering the downlink small data transmission.

As shown in FIG. 5, an embodiment of the present application provides a method for transmitting information. The method includes:
Step 501: A network side device transmits an RRC message to a terminal, where the RRC message carries configuration indication information, and the configuration indication information enables the terminal to receive downlink data in an RRC inactive state.

Optionally, the configuration indication information includes at least one of the following:
first indication information, where the first indication information is used for indicating a first operation; and
a first configuration, where the first configuration is a configuration used for receiving the downlink data, and
the first operation includes at least one of the following:
the first configuration is stored;
the first configuration is applied; and
downlink small data transmission is performed.

It should be noted that all descriptions about the network side device in the foregoing embodiment are applicable to embodiments of the method for transmitting information applied to a network side device side, and a same technical effect can also be achieved. Details are not repeated herein.

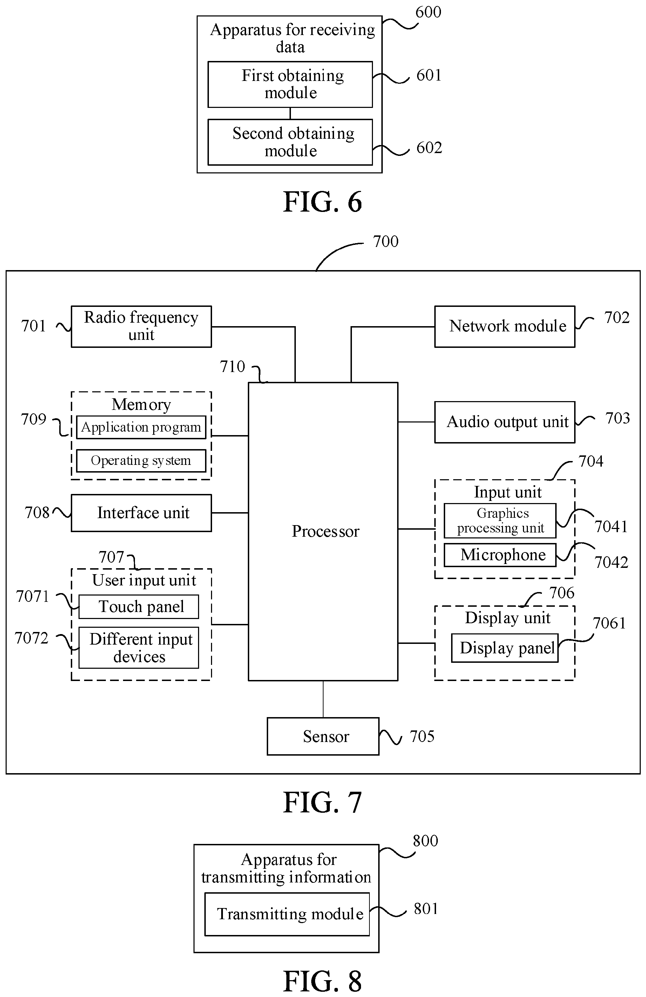

As shown in FIG. 6, an apparatus 600 for receiving data according to an embodiment of the present application is applied to a terminal, and includes:
a first receiving module 601 configured to receive a radio resource control RRC message, where the RRC message carries configuration indication information; and
a second receiving module 602 configured to receive downlink data in an RRC inactive state according to the configuration indication information.

Optionally, the configuration indication information includes at least one of the following:
first indication information, where the first indication information is used for indicating a first operation; and
a first configuration, where the first configuration is used for receiving the downlink data, and
the first operation includes at least one of the following:
the first configuration is stored;
the first configuration is applied; and
downlink small data transmission is performed.

Optionally, the apparatus further includes:
a first executing module configured to receive a paging message, and perform a second operation in a case that the first condition is satisfied, where
the second operation includes at least one of the following:
   an RRC connection resume process is triggered;
   a first paging group list is ignored, where the first paging group list is used for notifying activation of one or more multicast sessions indicated by a mobile group identity; and
   the first configuration is applied; and
   the first condition includes at least one of the following:
   the terminal is in an RRC inactive state;
   the terminal joins the one or more multicast sessions indicated by the mobile group identity;
   the mobile group identity is included in a second paging group list, the second paging group list is used for notifying a change of a second configuration, the second configuration corresponds to the one or more multicast sessions indicated by the mobile group identity, and the second configuration is used for receiving downlink data corresponding to the multicast sessions;
   the terminal is receiving the downlink data by using the first configuration;
   the terminal stores the first configuration;
   the first configuration is considered to be valid; and
   a paging record list of the paging message does not include a terminal identity matching an identity of the terminal.

Optionally, the apparatus further includes:
a second executing module configured to receive a paging message, and apply the first configuration in a case that a second condition is satisfied, where
the second condition includes at least one of the following:
the terminal is in the RRC inactive state;
the terminal joins the one or more multicast sessions indicated by the mobile group identity;
the mobile group identity is included in a first paging group list;
the mobile group identity is included in a first paging group list, indication information corresponding to an element storage location of the mobile group identity in a first paging record list indicates service activation, and the indication information is indication information of an element corresponding to the element storage location in a second paging record list;
the terminal suspends reception of the downlink data;
the terminal receives the downlink data without using the first configuration;
the terminal stores the first configuration;
the first configuration is considered to be valid;
the terminal receives a deactivation indication of the downlink data, and the deactivation indication of the downlink data is used for instructing to stop receiving the downlink data; and
a paging record list of the paging message does not include a terminal identity matching an identity of the terminal.

Optionally, the RRC message further includes: an effective time offset of the first configuration, where the effective time offset is used for instructing the terminal to apply the first configuration at a moment, and the moment is obtained after the effective time offset is added to a moment at which the RRC message or a target group paging message is received; and

the target group paging message is a paging message including a mobile group identity corresponding to one or more multicast sessions that the terminal joins.

Optionally, the apparatus further includes:
a third executing module configured to ignore a third configuration in the RRC inactive state, where the third configuration is used for transmitting uplink data.

Optionally, the apparatus further includes:
a fourth executing module configured to stop receiving the downlink data in a case that a deactivation indication of the downlink data is received in a process of receiving the downlink data in the RRC inactive state.

Optionally, the apparatus further includes:
a fifth executing module configured to receive the paging message, and perform a third operation in a case that the paging record list of the paging message includes the terminal identity matching the identity of the terminal, where
the third operation includes any one of the following:
the first paging group list is ignored; and
the second paging group list is ignored.

Optionally, the second receiving module is configured to:
receive a paging message, trigger a downlink small data transmission process in a case that a third condition is satisfied, and receive data of downlink small data transmission in the RRC inactive state, where
the third condition includes at least one of the following:
   a measurement value corresponding to a downlink path loss reference is greater than or equal to a first threshold;
   the terminal is in the RRC inactive state;
   the first indication information indicates the downlink small data transmission;
   the first configuration is indicated;
   a paging record list of the paging message includes a terminal identity matching an identity of the terminal; and
   second indication information corresponding to the terminal identity matching the identity of the terminal and included in the paging record list of the paging message indicates the downlink small data transmission.

Optionally, the apparatus further includes:
a sixth executing module configured to maintain a value of a PDCP state variable unchanged when suspending a packet data convergence protocol PDCP entity corresponding to a data radio bearer DRB.

Optionally, the apparatus further includes:
a third receiving module configured to receive, in a case that a downlink small data transmission process is triggered, the data of the downlink small data transmission in the RRC inactive state after transmitting an uplink message by using a target resource, where
the target resource includes at least one of the following:
a first random access resource used for transmitting message 1 of a random access process;
a second random access resource used for transmitting message A of the random access process;
a first configuration authorization resource, where the first configuration authorization resource is included in the first configuration; and
a second configuration authorization resource used for an uplink small data transmission process.

Optionally, the apparatus further includes:
a seventh executing module configured to select, in a case that the downlink small data transmission process is triggered, the first configuration authorization resource or the second configuration authorization resource as the target resource in a case that a fourth condition is satisfied; and select the first random access resource or the second random access resource as the target resource in a case that the fourth condition is unsatisfied, where
the fourth condition includes at least one of the following:
   the measurement value corresponding to the downlink path loss reference is greater than or equal to a second threshold, where the second threshold is used for the uplink small data transmission process;
   a timing advance TA is valid;
   the first configuration authorization resource is configured;
   the second configuration authorization resource is configured;
   a measurement value of at least one downlink reference signal in one or more downlink reference signals corresponding to the first configuration authorization resource is greater than or equal to a third threshold; and
   a measurement value of at least one downlink reference signal in one or more downlink reference signals corresponding to the second configuration authorization resource is greater than or equal to a fourth threshold.

Optionally, the apparatus further includes:
an eighth executing module configured to perform, in a case that the downlink small data transmission process is triggered, a fifth operation in a case that a fifth condition is satisfied, where
the fifth condition includes at least one of the following:
   the terminal does not perform first transmission of a common control channel message;
   the terminal does not generate a media access control protocol data unit MAC PDU including the common control channel message;
   a trigger condition of the uplink small data transmission process based on the random access process exists;
   a trigger condition of the uplink small data transmission process based on a configuration authorization exists; and
   a quantity of reception failures of a random access response message is greater than or equal to A, or a quantity of contention resolution failures is greater than or equal to B, where A and B are integers greater than or equal to 1; and
   the fifth operation includes at least one of the following:
   the terminal transmits the uplink message by using a random access resource corresponding to the uplink small data transmission process based on the random access process;
   the terminal transmits the uplink message by using a configuration authorization, where the configuration authorization corresponds to the uplink small data transmission process based on the configuration authorization; and
   the MAC PDU including the common control channel message is reconstructed.

Optionally, the apparatus further includes:
a starting module configured to start a first timer in a case that a first common control channel message is transmitted or the downlink small data transmission process is triggered, where
the first timer runs in a process that the terminal performs the downlink small data transmission process.

Optionally, the apparatus further includes:
a restarting module configured to restart the first timer in a case of receiving a first dedicated transmission channel DTCH message.

Optionally, the apparatus further includes:
a releasing module configured to enter an idle state in a case that the first timer expires, and release the first configuration.

Optionally, the apparatus further includes:
a ninth executing module configured to trigger an uplink small data transmission process based on a configuration authorization, and perform a sixth operation in a case that a sixth condition is satisfied; and perform a seventh operation in a case that the sixth condition is unsatisfied, where
the sixth condition includes at least one of the following:
the terminal is a reduced capability RedCap terminal;
an initial uplink bandwidth part BWP used for RedCap is configured on a selected uplink carrier;
the terminal is in the RRC inactive state; and
an initial downlink BWP used for the RedCap is configured;
the sixth operation includes at least one of the following:
the terminal performs the uplink small data transmission process based on the configuration authorization by using the initial uplink BWP used for the RedCap; and
the terminal monitors a physical downlink control channel by using the initial downlink BWP used for the RedCap; and
the seventh operation includes at least one of the following:
the terminal performs the uplink small data transmission process based on the configuration authorization by using the initial uplink BWP; and
the terminal monitors a physical downlink control channel by using the initial downlink BWP.

It should be noted that the apparatus embodiment corresponds to the above method, all the implementations in the above method embodiment are applicable to the apparatus embodiment, and the same technical effect can also be achieved.

The apparatus for receiving data in the embodiment of the present application may be an electronic device, for example, an electronic device having an operating system, or a component in an electronic device, such as an integrated circuit or a chip. The electronic device may be a terminal, or may be another device other than a terminal. Illustratively, the terminal may include, but is not limited to, the above listed types of the terminal 11, and the another device may be a server, a network attached storage (Network Attached Storage, NAS), or the like. This is not specifically limited in the embodiment of the present application.

The apparatus for receiving data provided in the embodiment of the present application can implement various processes implemented in the method embodiment illustrated in FIG. 2, and the same technical effect is achieved. To avoid repetition, details are omitted herein.

An embodiment of the present application further provides a terminal. The terminal includes a processor and a communication interface. The communication interface is configured to: receive a radio resource control RRC message, where the RRC message carries configuration indication information; and receive downlink data in an RRC inactive state according to the configuration indication information.

Optionally, the configuration indication information includes at least one of the following:
first indication information, where the first indication information is used for indicating a first operation; and
a first configuration, where the first configuration is used for receiving the downlink data, and
the first operation includes at least one of the following:
   the first configuration is stored;
   the first configuration is applied; and
   downlink small data transmission is performed.

Optionally, the processor is configured to:
receive a paging message, and perform a second operation in a case that the first condition is satisfied, where
the second operation includes at least one of the following:
   an RRC connection resume process is triggered;
   a first paging group list is ignored, where the first paging group list is used for notifying activation of one or more multicast sessions indicated by a mobile group identity; and
   the first configuration is applied; and
   the first condition includes at least one of the following:
      the terminal is in an RRC inactive state;
      the terminal joins the one or more multicast sessions indicated by the mobile group identity;
      the mobile group identity is included in a second paging group list, the second paging group list is used for notifying a change of a second configuration, the second configuration corresponds to the one or more multicast sessions indicated by the mobile group identity, and the second configuration is used for receiving downlink data corresponding to the multicast sessions;
      the terminal is receiving the downlink data by using the first configuration;
      the terminal stores the first configuration;
      the first configuration is considered to be valid; and
      a paging record list of the paging message does not include a terminal identity matching an identity of the terminal.

Optionally, the processor is further configured to:
receive a paging message, and apply the first configuration in a case that a second condition is satisfied, where
the second condition includes at least one of the following:
   the terminal is in the RRC inactive state;
   the terminal joins the one or more multicast sessions indicated by the mobile group identity;
   the mobile group identity is included in a first paging group list;
   the mobile group identity is included in a first paging group list, indication information corresponding to an element storage location of the mobile group identity in a first paging record list indicates service activation, and the indication information is indication information of an element corresponding to the element storage location in a second paging record list;
   the terminal suspends reception of the downlink data;
   the terminal receives the downlink data without using the first configuration;
   the terminal stores the first configuration;
   the first configuration is considered to be valid;
   the terminal receives a deactivation indication of the downlink data, and the deactivation indication of the downlink data is used for instructing to stop receiving the downlink data; and
   a paging record list of the paging message does not include a terminal identity matching an identity of the terminal.

Optionally, the RRC message further includes: an effective time offset of the first configuration, where the effective time offset is used for instructing the terminal to apply the first configuration at a moment, and the moment is obtained after the effective time offset is added to a moment at which the RRC message or a target group paging message is received; and
the target group paging message is a paging message including a mobile group identity corresponding to one or more multicast sessions that the terminal joins.

Optionally, the processor is further configured to:
ignore a third configuration in the RRC inactive state, where the third configuration is used for transmitting uplink data.

Optionally, the communication interface is further configured to:
stop receiving the downlink data in a case that a deactivation indication of the downlink data is received in a process of receiving the downlink data in the RRC inactive state.

Optionally, the processor is further configured to:
receive the paging message, and perform a third operation in a case that the paging record list of the paging message includes the terminal identity matching the identity of the terminal, where
the third operation includes any one of the following:
   the first paging group list is ignored; and
   the second paging group list is ignored.
   Optionally, the communication interface is further configured to:
      receive a paging message, trigger a downlink small data transmission process in a case that a third condition is satisfied, and receive data of downlink small data transmission in the RRC inactive state, where
      the third condition includes at least one of the following:
         a measurement value corresponding to a downlink path loss reference is greater than or equal to a first threshold;
         the terminal is in the RRC inactive state;
         the first indication information indicates the downlink small data transmission;
         the first configuration is indicated;
         a paging record list of the paging message includes a terminal identity matching an identity of the terminal; and
         second indication information corresponding to the terminal identity matching the identity of the terminal and included in the paging record list of the paging message indicates the downlink small data transmission.

Optionally, the processor is further configured to:
maintain a value of a PDCP state variable unchanged when suspending a packet data convergence protocol PDCP entity corresponding to a data radio bearer DRB.

Optionally, the communication interface is further configured to: receive, in a case that a downlink small data transmission process is triggered, the data of the downlink small data transmission in the RRC inactive state after transmitting an uplink message by using a target resource, where
the target resource includes at least one of the following:
a first random access resource used for transmitting message 1 of a random access process;
a second random access resource used for transmitting message A of the random access process;
a first configuration authorization resource, where the first configuration authorization resource is included in the first configuration; and
a second configuration authorization resource used for an uplink small data transmission process.

Optionally, the processor is further configured to:
select, in a case that the downlink small data transmission process is triggered, the first configuration authorization resource or the second configuration authorization resource as the target resource in a case that a fourth condition is satisfied; and select the first random access resource or the second random access resource as the target resource in a case that the fourth condition is unsatisfied, where
the fourth condition includes at least one of the following:
   the measurement value corresponding to the downlink path loss reference is greater than or equal to a second threshold, where the second threshold is used for the uplink small data transmission process;
   a timing advance TA is valid;
   the first configuration authorization resource is configured;
   the second configuration authorization resource is configured;
   a measurement value of at least one downlink reference signal in one or more downlink reference signals corresponding to the first configuration authorization resource is greater than or equal to a third threshold; and
   a measurement value of at least one downlink reference signal in one or more downlink reference signals corresponding to the second configuration authorization resource is greater than or equal to a fourth threshold.

Optionally, the processor is further configured to:
perform, in a case that the downlink small data transmission process is triggered, a fifth operation in a case that a fifth condition is satisfied, where
the fifth condition includes at least one of the following:
   the terminal does not perform first transmission of a common control channel message;
   the terminal does not generate a media access control protocol data unit MAC PDU including the common control channel message;
   a trigger condition of the uplink small data transmission process based on the random access process exists;
   a trigger condition of the uplink small data transmission process based on a configuration authorization exists; and
   a quantity of reception failures of a random access response message is greater than or equal to A, or a quantity of contention resolution failures is greater than or equal to B, where A and B are integers greater than or equal to 1; and
   the fifth operation includes at least one of the following:
      the terminal transmits the uplink message by using a random access resource corresponding to the uplink small data transmission process based on the random access process;
      the terminal transmits the uplink message by using a configuration authorization, where the configuration authorization corresponds to the uplink small data transmission process based on the configuration authorization; and
      the MAC PDU including the common control channel message is reconstructed.

Optionally, the processor is further configured to:
start a first timer in a case that a first common control channel message is transmitted or the downlink small data transmission process is triggered, where
the first timer runs in a process that the terminal performs the downlink small data transmission process.

Optionally, the processor is further configured to:
restart the first timer in a case of receiving a first dedicated transmission channel DTCH message.

Optionally, the processor is further configured to:
enter an idle state in a case that the first timer expires, and release the first configuration.

Optionally, the processor is further configured to:
trigger an uplink small data transmission process based on a configuration authorization, and perform a sixth operation in a case that a sixth condition is satisfied; and perform a seventh operation in a case that the sixth condition is unsatisfied, where
the sixth condition includes at least one of the following:
the terminal is a reduced capability RedCap terminal;
an initial uplink bandwidth part BWP used for RedCap is configured on a selected uplink carrier;
the terminal is in the RRC inactive state; and
an initial downlink BWP used for the RedCap is configured;
the sixth operation includes at least one of the following:
   the terminal performs the uplink small data transmission process based on the configuration authorization by using the initial uplink BWP used for the RedCap; and
   the terminal monitors a physical downlink control channel by using the initial downlink BWP used for the RedCap; and
   the seventh operation includes at least one of the following:
   the terminal performs the uplink small data transmission process based on the configuration authorization by using the initial uplink BWP; and
   the terminal monitors a physical downlink control channel by using the initial downlink BWP.

The terminal embodiment corresponds to the above terminal side method embodiment. Implementation processes and implementations of the above method embodiment are all applicable to the terminal embodiment, and the same technical effects can be achieved. Specifically, FIG. 7 is a schematic structural diagram of hardware of a terminal according to the embodiment of the present application.

The terminal 700 includes, but is not limited to: at least some components of a radio frequency unit 701, a network module 702, an audio output unit 703, an input unit 704, a sensor 705, a display unit 706, a user input unit 707, an interface unit 708, a memory 709, a processor 710, etc.

Those skilled in the art may appreciate that the terminal 700 may further include a power supply (such as a battery) for supplying power to the components. The power supply may be logically connected to the processor 710 by a power management system, thereby implementing functions such as charging, discharging, and power consumption management by using the power management system. A terminal structure shown in FIG. 7 does not constitute a limitation on the terminal, and the terminal may include more or fewer components than shown, or combine some components, or have different component arrangements, which are not described herein in detail.

It should be understood that in the embodiment of the present application, the input unit 704 may include a graphics processing unit (Graphics Processing Unit, GPU) 7041 and a microphone 7042. The graphics processing unit 7041 performs processing on image data of a static picture or a video that is obtained by an image capture device (for example, a camera) in a video capture mode or an image capture mode. The display unit 706 may include a display panel 7061. The display panel 7061 may be configured in a form of a liquid crystal display, an organic light-emitting, etc. The user input unit 707 includes at least one of a touch panel 7071 and another input device 7072. The touch panel 7071 is also referred to as a touchscreen. The touch panel 7071 may include two parts of a touch detection apparatus and a touch controller. The another input device 7072 may include, but not limited to, a physical keyboard, a functional key (such as a volume control key or a switch key), a track ball, a mouse, and a joystick, which are not described herein in detail.

In the embodiment of the present application, after receiving downlink data from an access network device, the radio frequency unit 701 may transmit the downlink data to the processor 710 for processing. In addition, the radio frequency unit 701 may transmit uplink data to the network side device. Generally, the radio frequency unit 701 includes, but is not limited to, an antenna, an amplifier, a transceiver, a coupler, a low noise amplifier, a duplexer, etc.

The memory 709 may be configured to store a software program and various data. The memory 709 may mainly include a first storage area for storing a program or an instruction, and a second storage area for storing data. The first storage area may store an operating system, an application program or an instruction required by at least one function (for example, a sound playback function, and an image display function), etc. Moreover, the memory 709 may include a volatile memory or a non-volatile memory, and alternatively, the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in the embodiment of the present application includes, but is not limited to, these memories and any other suitable types of memories.

The processor 710 may include one or more processing units. Optionally, the processor 710 may integrate an application processor and a modem processor, where the application processor mainly processes operations involving an operating system, a user interface, an application program, etc. and the modem processor mainly processes a wireless communication signal, for example, a baseband processor. It can be understood that the modem processor may not be integrated into the processor 710.

The radio frequency unit 701 is configured to:
receive a radio resource control (RRC) message, where the RRC message carries configuration indication information; and receive downlink data in an RRC inactive state according to the configuration indication information.

Optionally, the configuration indication information includes at least one of the following:
first indication information, where the first indication information is used for indicating a first operation; and
a first configuration, where the first configuration is used for receiving the downlink data, and
the first operation includes at least one of the following:
the first configuration is stored;
the first configuration is applied; and
downlink small data transmission is performed.

Optionally, the processor 710 is further configured to:
receive a paging message, and perform a second operation in a case that the first condition is satisfied, where
the second operation includes at least one of the following:
   an RRC connection resume process is triggered;
   a first paging group list is ignored, where the first paging group list is used for notifying activation of one or more multicast sessions indicated by a mobile group identity; and
   the first configuration is applied; and
   the first condition includes at least one of the following:
      the terminal is in an RRC inactive state;
      the terminal joins the one or more multicast sessions indicated by the mobile group identity;
      the mobile group identity is included in a second paging group list, the second paging group list is used for notifying a change of a second configuration, the second configuration corresponds to the one or more multicast sessions indicated by the mobile group identity, and the second configuration is used for receiving downlink data corresponding to the multicast sessions;
      the terminal is receiving the downlink data by using the first configuration;
      the terminal stores the first configuration;
      the first configuration is considered to be valid; and
      a paging record list of the paging message does not include a terminal identity matching an identity of the terminal.

Optionally, the processor 710 is further configured to:
receive a paging message, and apply the first configuration in a case that a second condition is satisfied, where
the second condition includes at least one of the following:
   the terminal is in the RRC inactive state; and
   the terminal joins the one or more multicast sessions indicated by the mobile group identity;
   the mobile group identity is included in a first paging group list;
   the mobile group identity is included in a first paging group list, indication information corresponding to an element storage location of the mobile group identity in a first paging record list indicates service activation, and the indication information is indication information of an element corresponding to the element storage location in a second paging record list;
   the terminal suspends reception of the downlink data;
   the terminal receives the downlink data without using the first configuration;
   the terminal stores the first configuration;
   the first configuration is considered to be valid;
   the terminal receives a deactivation indication of the downlink data, and the deactivation indication of the downlink data is used for instructing to stop receiving the downlink data; and
   a paging record list of the paging message does not include a terminal identity matching an identity of the terminal.

Optionally, the RRC message further includes: an effective time offset of the first configuration, where the effective time offset is used for instructing the terminal to apply the first configuration at a moment, and the moment is obtained after the effective time offset is added to a moment at which the RRC message or a target group paging message is received; and
the target group paging message is a paging message including a mobile group identity corresponding to one or more multicast sessions that the terminal joins.

Optionally, the processor 710 is further configured to:
ignore a third configuration in the RRC inactive state, where the third configuration is used for transmitting uplink data.

Optionally, the radio frequency unit 701 is further configured to:
stop receiving the downlink data in a case that a deactivation indication of the downlink data is received in a process of receiving the downlink data in the RRC inactive state.

Optionally, the processor 710 is further configured to:
receive the paging message, and perform a third operation in a case that the paging record list of the paging message includes the terminal identity matching the identity of the terminal, where
the third operation includes any one of the following:
   the first paging group list is ignored; and
   the second paging group list is ignored.

Optionally, the radio frequency unit 701 is further configured to:
receive a paging message, trigger a downlink small data transmission process in a case that a third condition is satisfied, and receive data of downlink small data transmission in the RRC inactive state, where
the third condition includes at least one of the following:
   a measurement value corresponding to a downlink path loss reference is greater than or equal to a first threshold;
   the terminal is in the RRC inactive state;
   the first indication information indicates the downlink small data transmission;
   the first configuration is indicated;
   a paging record list of the paging message includes a terminal identity matching an identity of the terminal; and
   second indication information corresponding to the terminal identity matching the identity of the terminal and included in the paging record list of the paging message indicates the downlink small data transmission.

Optionally, the processor 710 is further configured to:
maintain a value of a PDCP state variable unchanged when suspending a packet data convergence protocol PDCP entity corresponding to a data radio bearer DRB.

Optionally, the radio frequency unit 701 is further configured to: receive, in a case that a downlink small data transmission process is triggered, the data of the downlink small data transmission in the RRC inactive state after transmitting an uplink message by using a target resource, where
the target resource includes at least one of the following:
a first random access resource used for transmitting message 1 of a random access process;
a second random access resource used for transmitting message A of the random access process;
a first configuration authorization resource, where the first configuration authorization resource is included in the first configuration; and
a second configuration authorization resource used for an uplink small data transmission process.

Optionally, the processor 710 is further configured to:
select, in a case that the downlink small data transmission process is triggered, the first configuration authorization resource or the second configuration authorization resource as the target resource in a case that a fourth condition is satisfied; and select the first random access resource or the second random access resource as the target resource in a case that the fourth condition is unsatisfied, where
the fourth condition includes at least one of the following:
   the measurement value corresponding to the downlink path loss reference is greater than or equal to a second threshold, where the second threshold is used for the uplink small data transmission process;
   a timing advance TA is valid;
   the first configuration authorization resource is configured;
   the second configuration authorization resource is configured;
   a measurement value of at least one downlink reference signal in one or more downlink reference signals corresponding to the first configuration authorization resource is greater than or equal to a third threshold; and
   a measurement value of at least one downlink reference signal in one or more downlink reference signals corresponding to the second configuration authorization resource is greater than or equal to a fourth threshold.

Optionally, the processor 710 is further configured to:
perform, in a case that the downlink small data transmission process is triggered, a fifth operation in a case that a fifth condition is satisfied, where
the fifth condition includes at least one of the following:
   the terminal does not perform first transmission of a common control channel message;
   the terminal does not generate a media access control protocol data unit MAC PDU including the common control channel message;
   a trigger condition of the uplink small data transmission process based on the random access process exists;
   a trigger condition of the uplink small data transmission process based on a configuration authorization exists; and
   a quantity of reception failures of a random access response message is greater than or equal to A, or a quantity of contention resolution failures is greater than or equal to B, where A and B are integers greater than or equal to 1; and
   the fifth operation includes at least one of the following:
      the terminal transmits the uplink message by using a random access resource corresponding to the uplink small data transmission process based on the random access process;
      the terminal transmits the uplink message by using a configuration authorization, where the configuration authorization corresponds to the uplink small data transmission process based on the configuration authorization; and
      the MAC PDU including the common control channel message is reconstructed.

Optionally, the processor 710 is further configured to:
start a first timer in a case that a first common control channel message is transmitted or the downlink small data transmission process is triggered, where
the first timer runs in a process that the terminal performs the downlink small data transmission process.

Optionally, the processor 710 is further configured to:
restart the first timer in a case of receiving a first dedicated transmission channel DTCH message.

Optionally, the processor 710 is further configured to:
enter an idle state in a case that the first timer expires, and release the first configuration.

Optionally, the processor 710 is further configured to:
trigger an uplink small data transmission process based on a configuration authorization, and perform a sixth operation in a case that a sixth condition is satisfied; and perform a seventh operation in a case that the sixth condition is unsatisfied, where
the sixth condition includes at least one of the following:
   the terminal is a reduced capability RedCap terminal;
   an initial uplink bandwidth part BWP used for RedCap is configured on a selected uplink carrier;
   the terminal is in the RRC inactive state; and
   an initial downlink BWP used for the RedCap is configured;
   the sixth operation includes at least one of the following:
      the terminal performs the uplink small data transmission process based on the configuration authorization by using the initial uplink BWP used for the RedCap; and
      the terminal monitors a physical downlink control channel by using the initial downlink BWP used for the RedCap; and
      the seventh operation includes at least one of the following:
         the terminal performs the uplink small data transmission process based on the configuration authorization by using the initial uplink BWP; and
         the terminal monitors a physical downlink control channel by using the initial downlink BWP.

Optionally, an embodiment of the present application further provides a terminal. The terminal includes a processor, a memory, and a program or instructions that are stored in the memory and are runnable on the processor. The program or the instructions implement, when executed by the processor, various processes of the method embodiment for receiving data, and the same technical effects can be achieved. Details are not repeated herein to avoid repetition.

An embodiment of the present application further provides a readable storage medium. The storage medium may be volatile or nonvolatile. A computer readable storage medium stores a program or instructions. The program or instructions implement, when executed by a processor, various processes of the method embodiment for receiving data, and the same technical effects can be achieved. Details are not repeated herein to avoid repetition.

The computer-readable storage medium is, for example, a read-only memory (Read-Only Memory, ROM), a random access memory (Random Access Memory, RAM), a magnetic disk, or an optical disc.

As shown in FIG. 8, an embodiment of the present application further provides an apparatus 800 for transmitting information. The apparatus is applied to a network side device and includes:
a transmitting module 801 configured to transmit an RRC message to a terminal, where the RRC message carries configuration indication information, and the configuration indication information enables the terminal to receive downlink data in an RRC inactive state.

Optionally, the configuration indication information includes at least one of the following:
first indication information, where the first indication information is used for indicating a first operation; and
a first configuration, where the first configuration is a configuration used for receiving the downlink data, and
the first operation includes at least one of the following:
   the first configuration is stored;
   the first configuration is applied; and
   downlink small data transmission is performed.

It should be noted that the apparatus embodiment is an apparatus corresponding to the above method, all the implementations in the above method embodiment are applicable to this apparatus embodiment, and the same technical effect can also be achieved. Details are not described herein again.

An embodiment of the present application further provides a network side device. The network side device includes a processor and a communication interface. The communication interface is configured to transmit an RRC message to a terminal. The RRC message carries configuration indication information. The configuration indication information enables the terminal to receive downlink data in an RRC inactive state.

Optionally, the configuration indication information includes at least one of the following:
first indication information, where the first indication information is used for indicating a first operation; and
a first configuration, where the first configuration is a configuration used for receiving the downlink data, and
the first operation includes at least one of the following:
   the first configuration is stored;
   the first configuration is applied; and
   downlink small data transmission is performed.

Optionally, an embodiment of the present application further provides a network side device. The network side device includes a processor, a memory, and a program or instructions that are stored in the memory and are runnable on the processor. The program or the instructions implement, when executed by the processor, various processes of the method embodiment for transmitting information, and the same technical effects can be achieved. Details are not repeated herein to avoid repetition.

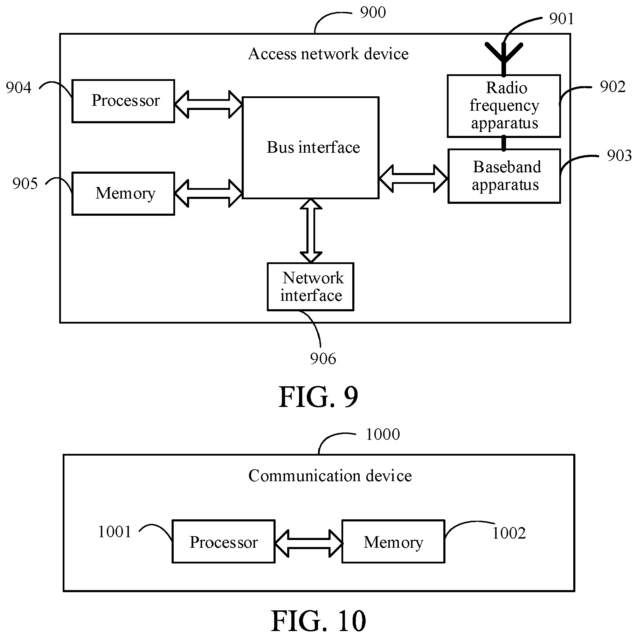

Specifically, the embodiment of the present application further provides a network side device. As shown in FIG. 9, an access network device 900 includes: an antenna 901, a radio frequency apparatus 902, a baseband apparatus 903, a processor 904, and a memory 905. The antenna 901 is connected to the radio frequency apparatus 902. In an uplink direction, the radio frequency apparatus 902 receives information through the antenna 901, and transmits the received information to the baseband apparatus 903 for processing. In a downlink direction, the baseband apparatus 903 processes to-be-transmitted information, and transmits the information to the radio frequency apparatus 902. The radio frequency apparatus 902 processes the received information and then transmits the information out through the antenna 901.

The method performed by the access network device in the foregoing embodiments may be implemented in the baseband apparatus 903. The baseband apparatus 903 includes a baseband processor.

The baseband apparatus 903, for example, may include at least one baseband board. A plurality of chips are arranged on the baseband board. As shown in FIG. 9, one of the chips is, for example, a baseband processor which is connected to the memory 905 through a bus interface to call programs in the memory 905 to perform the operations of the network device shown in the above method embodiment.

The network side device may also include a network interface 906. The interface is, for example, a common public radio interface (common public radio interface, CPRI).

Specifically, the access network device 900 in the embodiment of the present application further includes: an instruction or a program stored in the memory 905 and runnable on the processor 904. The processor 904 invokes the instruction or the program in the memory 905 to perform the method executed by the modules shown in FIG. 8, and the same technical effects are achieved. To avoid repetition, details are omitted herein.

An embodiment of the present application further provides a readable storage medium. The storage medium may be volatile or nonvolatile. The readable storage medium stores a program or instructions. The program or instructions implement, when executed by a processor, various processes of the method embodiment for transmitting information, and the same technical effects can be achieved. Details are not repeated herein to avoid repetition.

The processor is a processor in the access network device in the above embodiment. The readable storage medium may be non-volatile or non-transient. The readable storage medium may include a computer-readable storage medium, such as a computer read-only memory ROM, a random access memory RAM, a magnetic disk, or an optical disc.

Optionally, as shown in FIG. 10, an embodiment of the present application further provides a communication device 1000. The communication device includes a processor 1001 and a memory 1002. The memory 1002 stores a program or instructions runnable on the processor 1001. For example, when the communication device 1000 is a terminal, the program or the instructions implement, when executed by the processor 1001, various steps of the method embodiment for receiving data mentioned above, and the same technical effect can be achieved. When the communication device 1000 is a network side device, the program or the instructions implement, when executed by the processor 1001, various steps of the method embodiment for transmitting information, and the same technical effects can be achieved. Details are not repeated herein to avoid repetition.

An embodiment of the present application further provides a chip. The chip includes a processor and a communication interface. The communication interface is coupled to the processor. The processor is configured to run a program or an instruction, so as to implement all processes in the method embodiment for receiving data and the method embodiment for transmitting information, and the same technical effects can be achieved. Details are not repeated herein to avoid repetition.

It should be understood that the chip mentioned in the embodiment of the present application may also be referred to as a system-level chip, a system chip, a chip system, a system-on-chip, or the like.

An embodiment of the present application further provides a computer program/program product. The computer program/program product is stored in a storage medium. The computer program/program product is executed by at least one processor, to implement all processes of the method embodiment for transmitting information, and the same technical effects can be achieved. Details are not repeated herein to avoid repetition.

An embodiment of the present application further provides a communication system. The communication system includes: a terminal and a network side device. The terminal may be configured to perform steps of the above method for receiving data. The network side device may be configured to perform steps of the above method for transmitting information.

It should be noted that the terms "comprise", "include", or their any other variations are intended to cover non-exclusive inclusion. Thus a process, method, product, or apparatus including a series of elements further includes other elements that are not explicitly listed except for those elements, or further includes elements inherent to such a process, method, product, or apparatus. Without more restrictions, the elements defined by the sentence "comprise a ..." and "include a ..." do not exclude the existence of other identical elements in the process, method, article, or device including the elements. In addition, it should be noted that a scope of the method and apparatus in the implementations of the present application is not limited to execute the functions in the order shown or discussed, and may further execute the functions in a substantially simultaneous manner or in a reverse order according to the functions involved. For example, the method described may be executed in an order different from the order described, and various steps may further be added, omitted, or combined. In addition, features described with reference to some examples may also be combined in other examples.

Through the description of implementations, those skilled in the art can clearly understand that the method of the above embodiments may be implemented in combination of software and a necessary general-purpose hardware platform and may also be certainly implemented through hardware. However, the former is a preferred implementation in many cases. Based on such an understanding, the technical solutions of the present application essentially or the part contributing to the prior art may be implemented in a form of a computer software product. The computer software product is stored in a storage medium (such as an ROM/RAM, a magnetic disk, or an optical disc) and includes several instructions for instructing a terminal (which may be a mobile phone, a computer, a server, an air conditioner, a network device, or the like) to execute the methods described in the embodiments of the present application.

The embodiments of the present application have been described above in conjunction with the accompanying drawings. The present application is not limited to the specific implementations described above, and the specific implementations described above are merely illustrative and not limitative. Those of ordinary skill in the art may make various variations under the teaching of the present application without departing from the spirit of the present application and the protection scope of the claims, and such variations shall all fall within the protection scope of the present application.

## Claims

1. A method for receiving data, comprising:
receiving, by a terminal, a radio resource control RRC message, wherein the RRC message carries configuration indication information; and
receiving, by the terminal, downlink data in an RRC inactive state according to the configuration indication information.

2. The method according to claim 1, wherein the configuration indication information comprises at least one of the following:
first indication information, wherein the first indication information is used for indicating a first operation; and
a first configuration, wherein the first configuration is used for receiving the downlink data, and
the first operation comprises at least one of the following:
storing the first configuration;
applying the first configuration; and
performing downlink small data transmission.

3. The method according to claim 2, further comprising:
receiving, by the terminal, a paging message, and performing a second operation in a case that the first condition is satisfied, wherein
the second operation comprises at least one of the following:
triggering an RRC connection resume process;
ignoring a first paging group list, wherein the first paging group list is used for notifying activation of one or more multicast sessions indicated by a mobile group identity; and
applying the first configuration; and
the first condition comprises at least one of the following:
the terminal is in an RRC inactive state;
the terminal joins the one or more multicast sessions indicated by the mobile group identity;
the mobile group identity is comprised in a second paging group list, the second paging group list is used for notifying a change of a second configuration, the second configuration corresponds to the one or more multicast sessions indicated by the mobile group identity, and the second configuration is used for receiving downlink data corresponding to the multicast sessions;
the terminal is receiving the downlink data by using the first configuration;
the terminal stores the first configuration;
the first configuration is considered to be valid; and
a paging record list of the paging message does not comprise a terminal identity matching an identity of the terminal.

4. The method according to claim 2, further comprising:
receiving, by the terminal, a paging message, and applying the first configuration in a case that a second condition is satisfied, wherein
the second condition comprises at least one of the following:
the terminal is in the RRC inactive state;
the terminal joins the one or more multicast sessions indicated by the mobile group identity;
the mobile group identity is comprised in a first paging group list;
the mobile group identity is comprised in a first paging group list, indication information corresponding to an element storage location of the mobile group identity in a first paging record list indicates service activation, and the indication information is indication information of an element corresponding to the element storage location in a second paging record list;
the terminal suspends reception of the downlink data;
the terminal receives the downlink data without using the first configuration;
the terminal stores the first configuration;
the first configuration is considered to be valid;
the terminal receives a deactivation indication of the downlink data, and the deactivation indication of the downlink data is used for instructing to stop receiving the downlink data; and
a paging record list of the paging message does not comprise a terminal identity matching an identity of the terminal.

5. The method according to any one of claims 2 to 4, wherein the RRC message further comprises: an effective time offset of the first configuration, wherein the effective time offset is used for instructing the terminal to apply the first configuration at a moment, and the moment is obtained after the effective time offset is added to a moment at which the RRC message or a target group paging message is received; and
the target group paging message is a paging message comprising a mobile group identity corresponding to one or more multicast sessions that the terminal joins.

6. The method according to any one of claims 1 to 5, further comprising:
ignoring, by the terminal, a third configuration in the RRC inactive state, wherein the third configuration is used for transmitting uplink data.

7. The method according to claim 1, further comprising:
stopping, by the terminal, receiving the downlink data in a case that a deactivation indication of the downlink data is received in a process of receiving the downlink data in the RRC inactive state.

8. The method according to any one of claims 2 to 4, further comprising:
receiving, by the terminal, the paging message, and performing a third operation in a case that the paging record list of the paging message comprises the terminal identity matching the identity of the terminal, wherein
the third operation comprises any one of the following:
ignoring the first paging group list; and
ignoring the second paging group list.

9. The method according to claim 2, wherein the receiving, by the terminal, downlink data in an RRC inactive state according to the configuration indication information comprises:
receiving, by the terminal, a paging message, triggering a downlink small data transmission process in a case that a third condition is satisfied, and receiving data of downlink small data transmission in the RRC inactive state, wherein
the third condition comprises at least one of the following:
a measurement value corresponding to a downlink path loss reference is greater than or equal to a first threshold;
the terminal is in the RRC inactive state;
the first indication information indicates the downlink small data transmission;
the first configuration is indicated;
a paging record list of the paging message comprises a terminal identity matching an identity of the terminal; and
second indication information corresponding to the terminal identity matching the identity of the terminal and comprised in the paging record list of the paging message indicates the downlink small data transmission.

10. The method according to claim 1 or 9, further comprising:
maintaining, by the terminal, a value of a PDCP state variable unchanged when suspending a packet data convergence protocol PDCP entity corresponding to a data radio bearer DRB.

11. The method according to claim 9, further comprising:
in a case that a downlink small data transmission process is triggered, receiving, by the terminal, the data of the downlink small data transmission in the RRC inactive state after transmitting an uplink message by using a target resource, wherein
the target resource comprises at least one of the following:
a first random access resource used for transmitting message 1 of a random access process;
a second random access resource used for transmitting message A of the random access process;
a first configuration authorization resource, wherein the first configuration authorization resource is comprised in the first configuration; and
a second configuration authorization resource used for an uplink small data transmission process.

12. The method according to claim 11, further comprising:
in a case that the downlink small data transmission process is triggered, selecting, by the terminal, the first configuration authorization resource or the second configuration authorization resource as the target resource in a case that a fourth condition is satisfied; and selecting the first random access resource or the second random access resource as the target resource in a case that the fourth condition is unsatisfied, wherein
the fourth condition comprises at least one of the following:
the measurement value corresponding to the downlink path loss reference is greater than or equal to a second threshold, wherein the second threshold is used for the uplink small data transmission process;
a timing advance TA is valid;
the first configuration authorization resource is configured;
the second configuration authorization resource is configured;
a measurement value of at least one downlink reference signal in one or more downlink reference signals corresponding to the first configuration authorization resource is greater than or equal to a third threshold; and
a measurement value of at least one downlink reference signal in one or more downlink reference signals corresponding to the second configuration authorization resource is greater than or equal to a fourth threshold.

13. The method according to claim 9 or 11, further comprising:
in a case that the downlink small data transmission process is triggered, performing, by the terminal, a fifth operation in a case that a fifth condition is satisfied, wherein
the fifth condition comprises at least one of the following:
the terminal does not perform first transmission of a common control channel message;
the terminal does not generate a media access control protocol data unit MAC PDU comprising the common control channel message;
a trigger condition of the uplink small data transmission process based on the random access process exists;
a trigger condition of the uplink small data transmission process based on a configuration authorization exists; and
a quantity of reception failures of a random access response message is greater than or equal to A, or a quantity of contention resolution failures is greater than or equal to B, wherein A and B are integers greater than or equal to 1; and
the fifth operation comprises at least one of the following:
transmitting, by the terminal, the uplink message by using a random access resource corresponding to the uplink small data transmission process based on the random access process;
transmitting, by the terminal, the uplink message by using a configuration authorization, wherein the configuration authorization corresponds to the uplink small data transmission process based on the configuration authorization; and
reconstructing the MAC PDU comprising the common control channel message.

14. The method according to claim 9, further comprising:
starting, by the terminal, a first timer in a case that a first common control channel message is transmitted or the downlink small data transmission process is triggered, wherein
the first timer runs in a process that the terminal performs the downlink small data transmission process.

15. The method according to claim 14, further comprising:
restarting, by the terminal, the first timer in a case of receiving a first dedicated transmission channel DTCH message.

16. The method according to claim 14, further comprising:
causing the terminal to enter an idle state in a case that the first timer expires, and releasing the first configuration.

17. The method according to claim 1, further comprising:
triggering, by the terminal, an uplink small data transmission process based on a configuration authorization, and performing a sixth operation in a case that a sixth condition is satisfied; and performing a seventh operation in a case that the sixth condition is unsatisfied, wherein
the sixth condition comprises at least one of the following:
the terminal is a reduced capability RedCap terminal;
an initial uplink bandwidth part BWP used for RedCap is configured on a selected uplink carrier;
the terminal is in the RRC inactive state; and
an initial downlink BWP used for the RedCap is configured;
the sixth operation comprises at least one of the following:
performing, by the terminal, the uplink small data transmission process based on the configuration authorization by using the initial uplink BWP used for the RedCap; and
monitoring, by the terminal, a physical downlink control channel by using the initial downlink BWP used for the RedCap; and
the seventh operation comprises at least one of the following:
performing, by the terminal, the uplink small data transmission process based on the configuration authorization by using the initial uplink BWP; and
monitoring, by the terminal, a physical downlink control channel by using the initial downlink BWP.

18. A method for transmitting information, comprising:
transmitting, by a network side device, an RRC message to a terminal, wherein the RRC message carries configuration indication information, and the configuration indication information enables the terminal to receive downlink data in an RRC inactive state.

19. The method according to claim 18, wherein the configuration indication information comprises at least one of the following:
first indication information, wherein the first indication information is used for indicating a first operation; and
a first configuration, wherein the first configuration is a configuration used for receiving the downlink data, and
the first operation comprises at least one of the following:
storing the first configuration;
applying the first configuration; and
performing downlink small data transmission.

20. An apparatus for receiving data, applied to a terminal, comprising:
a first receiving module configured to receive a radio resource control RRC message, wherein the RRC message carries configuration indication information; and
a second receiving module configured to receive downlink data in an RRC inactive state according to the configuration indication information.

21. A terminal, comprising a processor and a memory, wherein the memory stores a program or instructions runnable on the processor, and the program or the instructions implement, when executed by the processor, steps of the method receiving data according to any one of claims 1 to 17.

22. An apparatus for transmitting information, applied to a network side device, comprising:
a transmitting module configured to transmit an RRC message to a terminal, wherein the RRC message carries configuration indication information, and the configuration indication information enables the terminal to receive downlink data in an RRC inactive state.

23. A network side device, comprising a processor and a memory, wherein the memory stores a program or instructions runnable on the processor, and the program or the instructions implement, when executed by the processor, steps of the method for transmitting information according to claim 18 or 19.

24. A readable storage medium, storing a program or instructions, wherein the program or the instructions implement, when executed by a processor, steps of the method according to any one of claims 1 to 19.
